# EUROPÄISCHE PATENTSCHRIFT

(11) **EP 2 830 407 B1**
(45) Veröffentlichungstag und Bekanntmachung des Hinweises auf die Patenterteilung: **28.06.2017**
(21) Anmeldenummer: 13718779.5
(22) Anmeldetag: 22.03.2013
(51) Int. Cl.: A01D 33/08, A23N 12/02

(54) **VORRICHTUNG ZUR REINIGUNG VON FELDFRÜCHTEN**
APPARATUS FOR CLEANING FIELD CROPS
DISPOSITIF POUR LE NETTOYAGE DE PRODUITS DES CHAMPS

(30) Priorität: 30.03.2012 DE 102012102763
(43) Veröffentlichungstag der Anmeldung: 04.02.2015
(73) Patentinhaber: USG Umweltservice GmbH & Co. KG, 42555 Velbert (DE)
(72) Erfinder: DOPPSTADT, Ferdinand, 42555 Velbert (DE)
(74) Vertreter: Willems, Volker
(86) Internationale Anmeldenummer: PCT/DE2013/100113
(87) Internationale Veröffentlichungsnummer: WO 2013/143536

(56) Entgegenhaltungen:
- EP-A1- 0 041 226
- DE-A1- 3 717 170
- DE-A1- 19 714 181
- DE-B- 1 298 769
- DE-B1- 1 607 629
- FR-A- 1 127 850
- FR-A1- 2 362 569
- NL-A- 6 515 105
- US-A- 1 736 813

## Beschreibung

### Technisches Gebiet

Die Erfindung betrifft eine Reinigungsvorrichtung zum Reinigen von Feldfrüchten, wie Kartoffeln oder Rüben, an welchen insbesondere Erde und dgl. anhaftet, bestehend aus
a) einem Einfüll- und/oder Vorratstrichter mit einer Öffnung an dessen Unterseite, aus dem die Feldfrüchte zur Reinigung gelangen,
b) einem Gehäuse mit einem Reinigungsbereich, in dem die Feldfrüchte gereinigt werden,
c) eine um eine Rotationsachse rotierende Siebtrommel, in welcher die Feldfrüchte gereinigt werden, wobei die Siebtrommel in dem Reinigungsbereich angeordnet ist,
d) die Rotationsachse der rotierenden Siebtrommel in einem spitzen Winkel gegenüber einer horizontalen liegenden Längsachse geneigt ist.

### Stand der Technik

Feldfrüchte, wie Kartoffeln oder Rüben, werden nachdem sie auf dem Feld geerntet wurden, von anhaftender Erde gereinigt.

Hierfür werden geeignete Reinigungsvorrichtungen verwendet. Es sind Maschinen bekannt, die über einen Einfüll- und Vorratstrichter als Sammelbehälter mit einer Öffnung an dessen Unterseite verfügen. Aus der Öffnung gelangen die Feldfrüchte zur Reinigung auf eine Transporteinrichtung. Die Feldfrüchte werden mit der Transporteinrichtung in einen Reinigungsbereich befördert. Insbesondere Bürsten reinigen die Feldfrüchte in dem Reinigungsbereich von der an ihnen anhaftenden Erde.

Aus der deutschen Gebrauchsmusterschrift DE 20 2005 004 507 U1 ist eine Bürsten-Wasch- und Poliermaschine für Feldfrüchte bekannt. Die dort beschriebene Vorrichtung zum Reinigen von Feldfrüchten besteht aus mehreren, eine Transportbahn bildenden, in einer Durchlaufrichtung der Feldfrüchte hintereinander liegenden Bürstenwalzen, welche drehend antreibbar sind. Die Bürstenwalzen liegen dabei in einer Ausgangsstellung in einer gemeinsamen Horizontalebene. Diese Bürsten-Wasch- und Poliermaschine für Feldfrüchte ist sehr aufwendig in der Herstellung und auch in der anschließenden Wartung. Fällt eine Bürstenwalze aus, kommt es zudem entweder zu einem Feldfrüchtestau oder einem ungleichmäßigen Weitertransport, der dazu führen kann, dass die Maschine verstopft, da die Feldfrüchte nicht mehr weitertransportiert werden.

In der DE 197 14 181 A1 wird eine Vorrichtung zur Reinigung von Früchten, insbesondere Feldfrüchten wie Rüben, beschrieben. Diese Vorrichtung zum Reinigen von Früchten weist ein im Wesentlichen zylindrisches oder mehreckiges Gehäuse mit zwei Gehäusestirnwänden auf. Dabei ist vorzugsweise die Rübenzuführ- und die Rübenaustragsvorrichtung kombiniert, wobei im Inneren des Gehäuses eine im Wesentlichen über die gesamte axiale Länge des Gehäuses verlaufende Früchteauflageeinrichtung angeordnet ist. Die Früchteauflageeinrichtung ist aus mindestens zwei parallel zueinander und dicht nebeneinander angeordneten Bürstenwalzen aufgebaut. Mindestens zwei Bürstenwalzen sind so ausgebildet, dass sie der Auflage, dem Transport und der Reinigung der Früchte dienen. Die zu reinigenden Früchte kommen bei dieser Vorrichtung auf den Bürsten zu liegen und werden an diesen gereinigt. Die Transportebene der Früchte liegt somit oberhalb der Ebene, in der die Transport- und Reinigungsbürsten liegen. Der auf den Früchten lastende Reinigungsdruck wird nur durch das Eigengewicht der Früchte bestimmt. Die Früchte werden durch die Umdrehungen der Bürsten mitgedreht und somit an allen Seiten gereinigt.

Die FR 2 362 569 betrifft eine Vorrichtung zum Reinigen von Zuckerrüben oder dgl. Wurzelfrüchten, mit einer Reinigungstrommel, einem dieser zugeordneten Fülltrichter und einem zur Beladung eines Lastwagens dienenden Querförderer. Die Trommel kann derart unterschiedlich geneigt sein, dass in die Reinigungsvorrichtung eine größere oder kleinere Menge von Zuckerrüben oder ähnlichen Produkten eingebracht werden kann, wobei die Abscheidung eines größeren oder kleineren Teils der Erde in Anhängigkeit von dem Prozentsatz der Erde gewährleistet ist, die auf den Zuckerrüben sitzt, d.h. entsprechend den Anbaugebieten und den Erntezeiten. Durch die in ihrer Schräglage verstellbare Trommel gelangt die Zuckerrübe unter Schwrerkraftwirkung auf den Förderer.

Aus der deutschen Auslegeschrift I 607 629 ist eine Anlage zur Waschreinigung von Zuckerrüben bekannt. Die Anlage enthält eine Trommel, in der die über ein Transportband zugeführten Rüben zunächst eingeweicht werden, und einen Reinigungsrost mit darüber angeordneten Sprühdüsen. Das unterhalb des ersten Bereiches des Rostes anfallendes Schmutzwasser wird abgeführt, während das unter dem zweiten Bereich des Rostes anfallende, bereits wesentlich sauberere Wasser über eine Pumpe der Trommel wieder zugeführt wird. Diese Trommel ist um ihre horizontal angeordnete Längsachse mittels eines nicht veranschaulichten Antriebes drehbar und ist an ihrem inneren Umfang mit Einbauten in Form einer ein- oder mehrgängigen Schnecke versehen. Die Schneckengänge weisen Löcher auf, durch die sich in den einzelnen, jeweils im unteren Bereich der Trommel zwischen zwei Windungen bildenden Zellen ein gleichmäßiger Wasserstand einstellen kann. Die niedrigen, am inneren Umfang angeordneten Rührleisten wenden den Zelleninhalt. Das Austragsende der Trommel ist mit einer Anzahl von Flügeln versehen, die ein Innenschöpfrad bilden. Im Bereich dieses Austragsendes der Trommel weist der Trommelumfang Löcher auf, durch die das Wasser ablaufen kann. In das als Innenschöpfrad ausgebildete Austragsende der Trommel ragt eine Transportrinne hinein, die die Rüben dem Rost zuführen.

DE 37 17 170 A1 beschreibt eine Vorrichtung zur Unterwasserwäsche von Knollenfrüchten mit einer Einfüllöffnung für die Knollenfrüchte, an welcher eine Einfüllschütte anschließt ist. Die Knollen werden in einem Reinigungsbereich in der rotierenden Siebtrommel gereinigt. Die Siebtrommel ist dabei entweder konisch bzw. kegelförmig oder als zylindrische Trommel mit geneigter Achslage ausgebildet

Die bekannten Reinigungsvorrichtungen haben insbesondere den Nachteil, dass ihr Transportsystem zur die Feldfrüchte sehr kompliziert und störanfällig aufgebaut ist. Die Bürstenwalzen bilden nämlich insbesondere zugleich das Transport- und Reinigungssystem. Dies führt zu erhöhtem Verschleiß der Bürstenwalzen, weil sie ständig dem Druck der darauf liegenden Feldfrüchte ausgesetzt sind.

### Offenbarung der Erfindung

Aufgabe der Erfindung ist es daher, Nachteile des Standes der Technik zu vermeiden und eine Reinigungsvorrichtung zu schaffen, die insbesondere sehr effektiv ist. Außerdem soll sie ein wenig störanfälliges und einfaches Transportsystem für die Feldfrüchte aufweisen.

Erfindungsgemäß wird die Aufgabe dadurch gelöst, dass bei einer Reinigungsvorrichtung zum Reinigen von Feldfrüchten der eingangs genannten Art
e) die Neigung der Rotationsachse der rotierenden Siebtrommel variabel einstellbar ausgebildet ist, wobei die Feldfrüchte sich durch die Siebtrommel gegen die Gravitationskraft in axialer Richtung bewegen und
f) Bürstenmittel vorgesehen sind, welche eine Bürstenwalze aufweisen, die an der Siebtrommel anliegt.

Die erfindungsgemäße Reinigungsvorrichtung hat den Vorteil, dass die Feldfrüchte sich in der Siebtrommel zunächst gegen die Gravitationskraft bewegen müssen.

Dadurch kommt es zu einer Bewegung unter einander. Die Feldfrüchten reiben während des Transports in der Siebtrommel aneinander, so dass sich die Erde dabei in der Siebtrommel durch die Reibung optimal löst. Starkes Abbürsten ist nicht mehr erforderlich. Diese erfindungsgemäße Maßnahme führt insbesondere dazu, dass mit wenig Energieaufwand, die Erde von den Feldfrüchten gelöst wird. Der spitze Winkel der Siebtrommel sollte dabei so gewählt werden, dass die Reibung der Siebtrommel ausreichend ist, um die Feldfrüchte gegen die Gravitation in der Siebtrommel noch zu transportieren.

In einer bevorzugten Ausbildung der erfindungsgemäßen Reinigungsvorrichtung zum Reinigen von Feldfrüchten sind Transportmittel für die Fortbewegung der Feldfrüchte in der Siebtrommel vorgesehen. Vorzugsweise sind die Transportmittel dabei in der Siebtrommel als schneckenförmige Führungen ausgebildet. Diese Maßnahme bewirkt, dass den zu reinigenden Feldfrüchten eine Richtung in der Siebtrommel vorgegeben wird, um nicht nur in die Trommel, sondern auch wieder heraus zu gelangen, ohne das die Feldfrüchte durch zu viel Krafteinwirkung zerstört werden. Die Transportmittel können dabei bspw. als Rillen oder Schienen ausgestaltet sein, die an der Innenwand der Siebtrommel schneckenförmig entlang laufen. Reibungseffekt. Diese Schwellen, Hubbel, Bürsten oder dgl. auf bzw. in den Führungen verstärken dabei u.U. die Reibungseffekte der Feldfrüchte untereinander, die bereits durch die Neigung der Siebtrommel gegeben sind. Die Mittel wirken so, dass die Feldfrüchte eine zusätzliche relative Bewegung zueinander erfahren.

In einer vorteilhaften Ausgestaltung der erfindungsgemäßen Reinigungsvorrichtung ist daher die Neigung der Rotationsachse der rotierenden Siebtrommel variabel einstellbar ausgebildet. Damit kann die Siebtrommel immer auf die Feldfrüchte, d.h. beispielsweise auf deren Durchmesser oder Gewicht eingestellt werden, so dass ausreichende Reibung für den Transport der Feldfrüchte innerhalb der Siebtrommel vorliegt. Auf diese Weise kann gewährleistet werden, dass es zu keinem Stau in der Siebtrommel kommt, weil zum Beispiel die Gravitationskraft größer ist als die Reibungskraft der Siebtrommel in der Siebtrommel. Hierfür ist lediglich erforderlich, dass die Neigung der Siebtrommel entsprechend eingestellt ist.

Eine weitere vorteilhafte Ausgestaltung der erfindungsgemäßen Reinigungsvorrichtung zum Reinigen von Feldfrüchten besteht darin, dass Bürstenmittel vorgesehen sind, welche eine Bürstenwalze aufweisen. Die Bürstenwalze weist eine Welle auf, welche in der Reinigungsvorrichtung oberhalb des im spitzen Winkel verlaufenden Förderbandes gelagert und mit einem Antrieb angetrieben ist. Die als Bürstenwalze ausgebildeten Bürstenmittel reinigen die Feldfrüchte auf diese Weise aktiv. Die Bürstenwalze befindet sich auf einer Welle, welche mit einem eigenen Antrieb zur Rotation angetrieben wird. Durch diese Rotation reiben die Borsten der Bürstenwalze die Erde aktiv von den Feldfrüchten, welche ggf. mittels Förderband an der Bürstenwalze vorbeitransportiert werden, ab. Vorzugsweise weisen die Bürstenmittel zwei Bürstenwalzen auf, welche in der Reinigungsvorrichtung mit einem Antrieb in einer gegenläufigen Rotationsrichtung angetrieben sind. Durch die Verwendung von mehr als einer Bürstenwalze wird die Reinigung durch die Borsten verstärkt. Wenn dabei noch zwei Bürstenwalzen in ihrer Rotationsrichtung gegenläufig ausgestaltet sind, dann kommt es noch zu einem zusätzlichen und verstärkenden Reinigungseffekt.

Eine besonders vorteilhafte Ausgestaltung der erfindungsgemäßen Reinigungsvorrichtung für Feldfrüchte besteht ferner darin, dass eine Sprüheinrichtung mit einer oder mehreren Hochdruckdüsen in dem Reinigungsbereich vorgesehen ist, welche die Feldfrüchte mit Wasser unter Hochdruck reinigen. Durch das Wasser wird die Erde abgewaschen. Der Hochdruck des Wassers, der auf die Feldfrüchte trifft, bewirkt dabei, dass selbst hartnäckige Erdrückstände gelöst werden.

Um eine gleichmäßige Reinigung zu erhalten, weist die Sprüheinrichtung in einer bevorzugten Ausbildung der erfindungsgemäßen Reinigungsvorrichtung eine schwenkbare Hochdruckdüse auf, welche die Feldfrüchte mit Wasser unter Hochdruck reinigt. Das Schwenken der Hochdruckdüse kann dabei manuell, aber auch bevorzugt automatisch erfolgen. Damit lässt sich die Erde gleichmäßig von allen Feldfrüchten ablösen. Die Anzahl der Hochdruckdüsen kann durch die Schwenkbarkeit zudem reduziert werden. Dabei können die Hochdruckdüsen zum Schwenken bspw. entlang einer Kulisse geführt werden. Hierfür kann ein geeigneter Antrieb vorgesehen sein.

Um zusätzliche und effektive Reinigungseffekte bei der erfindungsgemäßen Reinigungsvorrichtung zu erhalten, ist eine Rütteleinrichtung zum Rütteln der Feldfrüchte vorgesehen. Diese Rütteleinrichtung bewirkt, dass anhaftende Erde gelockert und gelöst wird.

Um die Erde von den Feldfrüchten zu trennen, ist in einer vorteilhaften Ausgestaltung der Erfindung ein Sieb zum Aussieben der Erde und dgl. vorgesehen. Das Sieb sollte so ausgebildet sein, dass die Erde durch die Maschen hindurch fällt und die Feldfrüchte darauf liegen bleiben.

In einer besonderen Ausbildung ist die erfindungsgemäße die Reinigungsvorrichtung als mobiler Anhänger für eine Zugmaschine ausgestaltet. Eine solche Reinigungsvorrichtung lässt sich bequem zu den Feldfrüchten transportieren, um sie bereits am Herstellungsort, also am Feld zu reinigen. Dies spart Raum und Gewicht, da die Feldfrüchte zur anschließenden Weiterverarbeitung bereits gereinigt sind. Somit fallen bspw. geringere Transportkosten an.

Vorzugsweise verfügt die erfindungsgemäße Reinigungsvorrichtung über ein mit Wasser gefülltes Reinigungsbecken, durch welches die Feldfrüchte zum Reinigen mittels Förderband transportiert werden. Damit kann zusätzlich Erde von den Feldfrüchten abgelöst werden und dies unterstützt insbesondere vorgenannte Reinigungsmechanismen.

Eine weitere bevorzugte Ausgestaltung der erfindungsgemäßen Reinigungsvorrichtung zum Reinigen von Feldfrüchten, wie Kartoffeln oder Rüben, besteht darin, dass die Siebtrommel oberhalb eines Wasserauffangbeckens angeordnet ist. Die abgelöste Erde fällt damit in das Auffangbecken und kann in dem Wasser gelöst leicht abtransportiert werden.

Weitere Ausgestaltungen und Vorteile ergeben sich aus dem Gegenstand der Unteransprüche sowie der Beschreibung eines Ausführungsbeispiels, welches anhand der Figuren erläutert wird.

### Kurze Beschreibung der Zeichnung

- Fig. 1: zeigt eine erfindungsgemäße mobile Reinigungsvorrichtung in einer schematischen perspektivischen Prinzipskizze.
- Fig. 2: zeigt eine erfindungsgemäße mobile Reinigungsvorrichtung gemäß Fig. 1 in einer Seitenansicht.

### Bevorzugtes Ausführungsbeispiel

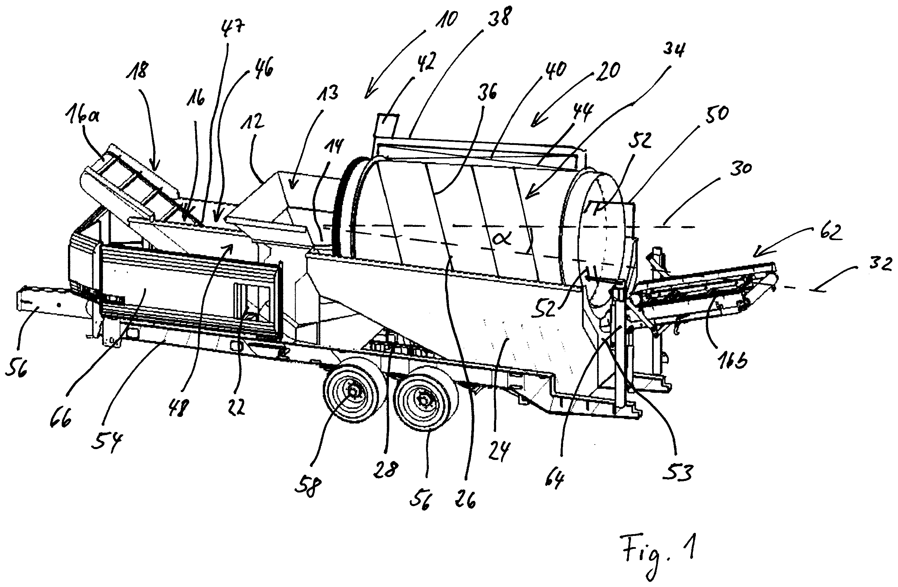

In Fig. 1 wird mit 10 eine Reinigungsvorrichtung zum Reinigen von Feldfrüchten, wie Kartoffeln oder Rüben, an welchen insbesondere Erde und dgl. anhaftet, bezeichnet. Die Reinigungsvorrichtung 10 verfügt über einen Einfüll- und Vorratstrichter 12. Der Einfüll-und Vorratstrichter 12 weist eine Öffnung 13 an dessen Unterseite 14 auf, aus der die Feldfrüchte für den Reinigungsvorgang gelangen. Dazu verläuft unterhalb der Öffnung 13 des Einfüll- und Vorratstrichters 12 ein Förderband 16 einer Fördereinrichtung 18. Mittels des Förderbandes 16 werden die zu reinigenden Feldfrüchte in und aus einem Reinigungsbereich 20 transportiert. Die Fördereinrichtung 18 kann dabei aus einem oder auch aus mehreren hintereinander und/oder auch parallel angeordneten Förderbandsegmenten 16a und 16b bestehen. Dabei treibt ein Antrieb 22 der Fördereinrichtung 18 jeweils die Förderbänder 16 für den Transport der Feldfrüchte an. Der Reinigungsbereich 20 weist ein Gehäuse 24 auf. Das Gehäuse 24 dient sowohl zum Schutz vor äußeren Einflüssen, als auch - bei geeigneter Isolierung - insbesondere als Lärmschutz.

Die Reinigungsvorrichtung 10 weist eine Siebtrommel 26 zum Aussieben der Erde und dgl. auf. Die Siebtrommel 26 wird durch einen Antrieb 28 zur Rotation um ihre Rotationsachse 30 angetrieben. Die Siebtrommel 26 ist in einem spitzen Winkel α angeordnet, d.h. die Rotationsachse 30 befindet sich in dem spitzen Winkel α gegenüber einer horizontalen liegenden Längsachse 32. Der spitze Winkel bewirkt dabei, dass die Feldfrüchte gegen die Gravitation durch die Siebtrommel 26 werden. Dadurch reiben sich die Feldfrüchte untereinander und zum Teil auch mit der Siebtrommel 26. Dies unterstützt das Lösen von anhaftender Erde von den Feldfrüchten.

Der spitze Winkel α der Siebtrommel 26 ist bei der vorliegenden Reinigungsvorrichtung variabel, d.h. einstellbar, ausgestaltet und kann daher entsprechend der Größe und des Gewichtes der Feldfrüchte angepasst werden. Sofern die Maschen der Siebtrommel 26 zum Ablösen der Erde nicht ausreichend sind, wird die relative Bewegung der Feldfrüchte zueinander bei Bedarf durch Hubbel bzw. Schwellen in der Siebtrommel 26 ggf. verstärkt. Die Feldfrüchte werden dabei nicht einfach durch die Siebtrommel 26 transportiert, sondern müssen noch zusätzliche Widerstände überwinden, an den sich die Erde lösen kann.

Die Feldfrüchte werden mit der Fördereinrichtung 18 zum Reinigen in die Siebtrommel 26 befördert. Die Feldfrüchte müssen daher zunächst gegen die Erdanziehungskraft beim Durchlaufen der Siebtrommel 26 anlaufen. Durch die Rotation innerhalb der Siebtrommel 26 lösen sich Erdreste von den Feldfrüchten und fallen durch die Maschen der Siebtrommel 26.

In der Siebtrommel 26 sind Transportmittel 34 vorgesehen. Die Transportmittel 34 unterstützen die Feldfrüchte durch die Siebtrommel 26 zu gelangen. Die Transportmittel 34 sind im vorliegenden Ausführungsbeispiel als spiralförmige Führungen 36 ausgebildet. Bei den spiralförmigen Führungen 36 handelt es sich vorzugsweise um schienenartige Vorsprünge, die an der Innenwand der Siebtrommel 26 vorgesehen sind. Sie geben den Feldfrüchten bei der Rotation der Siebtrommel 26 die axiale Richtung vor.

Ferner sind in dem Reinigungsbereich 20 Bürstenmittel 38 vorgesehen. Die Bürstenmittel 38 bestehen aus einer Bürstenwalze 40, welche mit einer Welle gelagert vorgesehen ist. Die Bürstenwalze 40 wird mit einem Antrieb 42 zur Rotation angetrieben. Borsten 44 der Bürstenwalze 40 können dabei mit unterschiedlicher Härte und Länge ausgebildet sein, um bestimmte Reinigungseffekte zu erhalten. Die Bürstenwalze 40 liegt schwenkbar von außen an der Siebtrommel 26 an. Sie löst insbesondere an der Siebtrommel 26 anhaftenden Erde und dgl., von den Maschen der Siebtrommel 26. Die Bürstenwalze 40 kann bei Bedarf auch innerhalb der Siebtrommel 26 zum unmittelbaren Reinigen der Feldfrüchte angeordnet sein.

Eine optionale Rütteleinrichtung 46, welche an dem Förderbandsegment 16a vorgesehen ist, sorgt ebenfalls durch Rütteln der Feldfrüchte unterstützend dafür, dass sich hartnäckig anhaftende Erde von der Oberfläche der Feldfrüchte löst. Die Rütteleinrichtung 46 kann ein Sieb 47 enthalten, durch welches ein Teil der anhaftenden Erde fällt.

Ein mit Wasser gefülltes Reinigungsbecken 48, durch welches die Feldfrüchte zum Reinigen mit der Fördereinrichtung 18 transportiert werden, unterstützt die Reinigungsprozedur weiterhin zusätzlich.

Eine Sprüheinrichtung 50 mit mehreren Hochdruckdüsen 52 ist in dem Reinigungsbereich 20 vorgesehen. Die Feldfrüchte werden damit im Reinigungsbereich 20 mit Wasser unter Hochdruck gereinigt. Die Hochdruckdüsen 52 sind dabei schwenkbar ausgebildet. Dadurch kann der Wasserstrahl jeweils einer Hochdruckdüse 52 eine größeren Bereich bzw. eine größere Fläche zur Reinigung der Feldfrüchte abdecken. Die Siebtrommel 26 ist oberhalb eines Wasserauffangbeckens 53 angeordnet. Die abgelöste Erde fällt damit in das Auffangbecken 53 und kann in dem Wasser gelöst leicht abtransportiert und gereinigt werden.

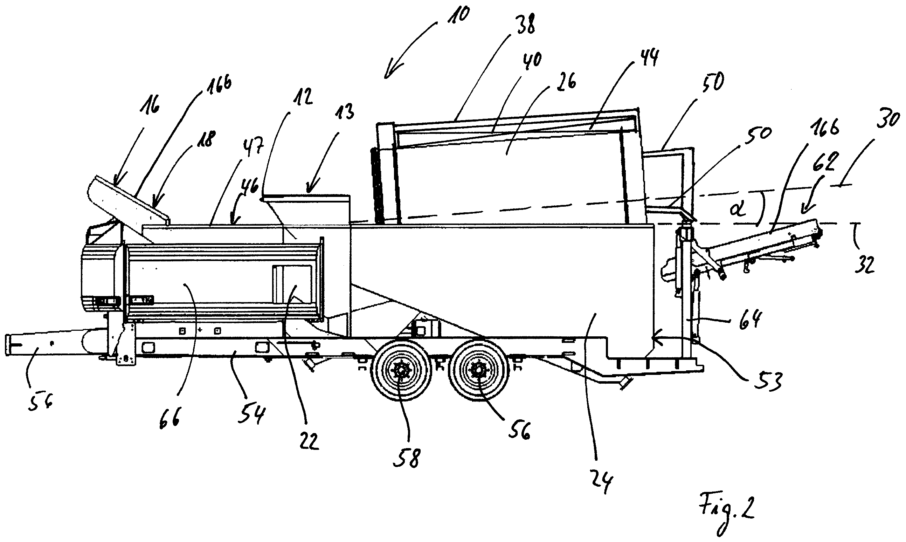

Die Reinigungsvorrichtung 10 ist in diesem Ausführungsbeispiel von Fig. 1 und 2 als mobiler Anhänger 54 für eine Zugmaschine ausgestaltet. Sie lässt sich somit an eine nicht dargestellte Zugmaschine mit einem Haken 56 anhängen und zum Einsatzort, bspw. ein Feld bewegen. Die Reinigungseinrichtung 10 verfügt über einen Rahmen, an welchem zwei Achsen 58 mit Rädern 60 gelagert sind.

Das Förderbandsegment 16b ist ferner als Auswurfförderband 62 ausgebildet, über welches die gereinigten Feldfrüchte bspw. auf einen Lastkraftwagen zum Abtransport befördert werden.

Aus Fig. 2, welches die Reinigungsvorrichtung 10 gemäß Fig. 1 in einer schematischen Seitenansicht darstellt, werden die Transportwege der Feldfrüchte über die Fördereinrichtung 18 noch deutlicher dargestellt. Soweit die Bestandteile sich mit der Fig. 1 entsprechen, werden hier auch dieselben Bezugszeichen verwendet. Die Fördereinrichtung 18 zeigt die drei Förderbandsegmente 16a und 16b für den Transport der Feldfrüchte. Das erste Förderbandsegment 16a holt die Feldfrüchte unterhalb der Öffnung des Einfüll- und Vorratstrichter 12 ab. Von dort werden die Feldfrüchte in die im spitzen Winkel Siebtrommel 26 befördert. Die Siebtrommel 26 führt in einem spitzen Winkel α durch den Reinigungsbereich 20 zur Reinigung der Feldfrüchte. Die Neigung der Siebtrommel 26 ist einstellbar, um sie an die Größe und das Gewicht der Feldfrüchte anzupassen. In dem Reinigungsbereich 20 wird die Siebtrommel 26 mit den Bürstenwalzen 40 zur Reinigung gebürstet. Mit der Sprüheinrichtung 50 mit Hochdruckwasserstrahlen abgestrahlt. Das Förderbandsegment 16b transportiert die Feldfrüchte schließlich aus diesem Teilbereich des Reinigungsbereiches 20 heraus bspw. auf einen LKW.

Für die Hochdruckdüsen 52 der Sprüheinrichtung 50 sind Wasseranschlüsse 64 vorgesehen. Das verbrauchte Wasser wird in einer Wasseraufbereitungsanlage 66 aufbereitet und dem Reinigungssystem, wieder zugeführt. Dadurch erhält man einen geschlossenen Wasserkreislauf und vermindert so den Wasserverbrauch.

## Patentansprüche

1. Reinigungsvorrichtung (10) zum Reinigen von Feldfrüchten, wie Kartoffeln oder Rüben, an welchen insbesondere Erde und dgl. anhaftet, bestehend aus
a) einem Einfüll- und/oder Vorratstrichter (12) mit einer Öffnung (13) an dessen Unterseite (14), aus dem die Feldfrüchte zur Reinigung gelangen,
b) einem Gehäuse (24) mit einem Reinigungsbereich (20), in dem die Feldfrüchte gereinigt werden,
c) eine um eine Rotationsachse (30) rotierende Siebtrommel (26), in welcher die Feldfrüchte gereinigt werden, wobei die Siebtrommel (26) in dem Reinigungsbereich (20) angeordnet ist,
d) die Rotationsachse (30) der rotierenden Siebtrommel (26) in einem spitzen Winkel (α) gegenüber einer horizontalen liegenden Längsachse (32) geneigt ist,
**dadurch gekennzeichnet, dass**
e) die Neigung der Rotationsachse (30) der rotierenden Siebtrommel (26) variabel einstellbar ausgebildet ist, wobei die Feldfrüchte sich durch die Siebtrommel (26) gegen die Gravitationskraft in axialer Richtung bewegen und
f) Bürstenmittel (38) vorgesehen sind, welche eine Bürstenwalze (40) aufweisen, die an der Siebtrommel (26) anliegt.

2. Reinigungsvorrichtung (10) zum Reinigen von Feldfrüchten, wie Kartoffeln oder Rüben, nach Anspruch 1, **dadurch gekennzeichnet, dass** Transportmittel (34) für die Fortbewegung der Feldfrüchte in der Siebtrommel (26) vorgesehen.

3. Reinigungsvorrichtung (10) zum Reinigen von Feldfrüchten, wie Kartoffeln oder Rüben, nach Anspruch 2, **dadurch gekennzeichnet, dass** die Transportmittel (34) in der Siebtrommel als spiralförmige Führungen (36) ausgebildet sind.

4. Reinigungsvorrichtung (10) zum Reinigen von Feldfrüchten, wie Kartoffeln oder Rüben, nach einem der Ansprüche 1 bis 3, **dadurch gekennzeichnet, dass** eine Sprüheinrichtung (50) mit einer oder mehreren Hochdruckdüsen (52) in dem Reinigungsbereich (20) vorgesehen ist, welche die Feldfrüchte mit Wasser unter Hochdruck reinigt.

5. Reinigungsvorrichtung (10) zum Reinigen von Feldfrüchten, wie Kartoffeln oder Rüben, nach Anspruch 4, **dadurch gekennzeichnet, dass** die Sprüheinrichtung (50) eine schwenkbare Hochdruckdüse (52) aufweist, welcher die Feldfrüchte mit Wasser unter Hochdruck reinigt.

6. Reinigungsvorrichtung (10) zum Reinigen von Feldfrüchten, wie Kartoffeln oder Rüben, nach einem der Ansprüche 1 bis 5, **dadurch gekennzeichnet, dass** eine Rütteleinrichtung (46) zum Rütteln der Feldfrüchte vorgesehen ist.

7. Reinigungsvorrichtung (10) zum Reinigen von Feldfrüchten, wie Kartoffeln oder Rüben, nach einem der Ansprüche 1 bis 6, **dadurch gekennzeichnet, dass** ein Sieb (47) zum Aussieben der Erde und dgl. vorgesehen ist.

8. Reinigungsvorrichtung zum Reinigen von Feldfrüchten, wie Kartoffeln oder Rüben, nach einem der Ansprüche 1 bis 7, **dadurch gekennzeichnet, dass** die Reinigungsvorrichtung (10) als mobiler Anhänger (50) für eine Zugmaschine ausgestaltet ist.

9. Reinigungsvorrichtung (10) zum Reinigen von Feldfrüchten, wie Kartoffeln oder Rüben, nach einem der Ansprüche 1 bis 8, **gekennzeichnet durch** ein mit Wasser gefülltes Reinigungsbecken (48), durch welches die Feldfrüchte zum Reinigen mittels Förderband (16) transportiert werden.

10. Reinigungsvorrichtung (10) zum Reinigen von Feldfrüchten, wie Kartoffel oder Rüben, nach einem der Ansprüche 1 bis 9, **dadurch gekennzeichnet, dass** die Siebtrommel (26) oberhalb eines Wasserauffangbeckens (53) angeordnet ist.

## Claims

1. A cleaning apparatus (10) for cleaning crops, such as potatoes or beets, on which in particular soil and the like adhere, comprising
a) a charging and / or supply hopper (12) with an opening (13) at its underside (14) from which the crops enter for cleaning,
b) a housing (24) with a cleaning region (20), in which the crops are cleaned,
c) a rotating screen drum (26) rotating about an axis of rotation (30) in which the crops are cleaned, wherein the screen drum (26) is arranged in the cleaning region (20),
d) the axis of rotation (30) of the rotating screen drum (26) is inclined at an acute angle (α) to a horizontal longitudinal axis,
**characterized in that**
e) the inclination of the axis of rotation (30) of the rotating screen drum (26) is variably adjustable, whereby the crops move itself against the gravity through the rotating screen drum (26) in axial direction and
f) brush means (38) are provided, comprising a brush roller (40) which fit closely at the screen drum (26)

2. A cleaning apparatus (10) for cleaning crops, such as potatoes or beets, according to claim 1, **characterized in that** transport means (34) are provided for the movement of the crops in the screen drum (26).

3. A cleaning apparatus (10) for cleaning crops, such as potatoes or beets, according to claim 2, **characterized in that** the transport means (34) in the screen drum are configured as helical guides (36).

4. A cleaning apparatus (10) for cleaning crops, such as potatoes or beets, according to any one of claims 1 to 3, **characterized in that** a spraying device (50) with one or more high-pressure nozzles (52) is provided in the cleansing region (20), which cleans the crops with water under high pressure

5. A cleaning apparatus (10) for cleaning crops, such as potatoes or beets, according to claim 4, **characterized in that** the spraying device (50) comprises a pivotable pressure nozzle (52), which cleans the crops with water under high pressure.

6. A cleaning apparatus (10) for cleaning crops, such as potatoes or beets, according to any one of claims 1 to 5, **characterized in that** a shaker device (46) is provided for shaking the crops.

7. A cleaning apparatus (10) for cleaning crops, such as potatoes or beets, according to any one of claims 1 to 6, **characterized in that** a screen (47) is provided for screening soil and the like.

8. A cleaning apparatus (10) for cleaning crops, such as potatoes or beets, according to any one of claims 1 to 7, **characterized in that** the cleaning apparatus (10) is adapted as a mobile trailer (50) for tractor unit.

9. A cleaning apparatus (10) for cleaning crops, such as potatoes or beets, according to any one of claims 1 to 8, **characterized in that** a water-filled cleaning basin (48) through which the crops are transported by a conveyor belt (16) for cleaning.

10. A cleaning apparatus (10) for cleaning crops, such as potatoes or beets, according to any one of claims 1 to 9, **characterized in that** the screen drum (26) is arranged above a water collecting basin (53).

## Revendications

1. Dispositif de nettoyage (10) destiné à nettoyer les produits des champs, tels que les pommes de terre ou les betteraves, auxquels adhèrent notamment de la terre et des matières semblables, composé de
(a) une trémie de chargement et/ou de stockage (12) munie sur sa face inférieure (14) d'un orifice (13) d'où sortent les produits des champs à nettoyer,
(b) un bâti (24) muni d'une zone de nettoyage (20) dans laquelle sont nettoyés les produits des champs,
(c) un tambour de criblage (26) tournant autour d'un axe de rotation (30) et dans lequel sont nettoyés les produits des champs, le tambour de criblage (26) étant disposé dans la zone de nettoyage (20),
(d) l'axe de rotation (30) du tambour de criblage (26) en rotation étant incliné dans un angle aigu (α) par rapport à un axe longitudinal (32) horizontal,
**caractérisé en ce que**
(e) l'inclinaison de l'axe de rotation (30) du tambour de criblage (26) en rotation est configurée de manière à pouvoir être réglée de manière variable, les produits des champs traversant le tambour de criblage (26) dans le sens axial à l'encontre de la force de gravitation et
(f) il est prévu des moyens de brossage (38) présentant un rouleau à brosse (40) placé contre le tambour de criblage (26).

2. Dispositif de nettoyage (10) destiné à nettoyer les produits des champs, tels que les pommes de terre ou les betteraves, selon la revendication 1, **caractérisé en ce que** des moyens de transport (34) sont prévus pour le déplacement des produits des champs dans le tambour de criblage (26).

3. Dispositif de nettoyage (10) destiné à nettoyer les produits des champs, tels que les pommes de terre ou les betteraves, selon la revendication 2, **caractérisé en ce que** les moyens de transport (34) situés dans le tambour de criblage sont configurés sous forme de barres de guidage (36) en forme de spirale.

4. Dispositif de nettoyage (10) destiné à nettoyer les produits des champs, tels que les pommes de terre ou les betteraves, selon l'une quelconque des revendications 1 à 3, **caractérisé en ce qu'**un dispositif d'arrosage (50) muni d'une ou de plusieurs buses haute pression (52) nettoyant les produits des champs avec de l'eau sous pression est prévue dans la zone de nettoyage (20).

5. Dispositif de nettoyage (10) destiné à nettoyer les produits des champs, tels que les pommes de terre ou les betteraves, selon la revendication 4, **caractérisé en ce que** le dispositif d'arrosage (50) présente une buse haute pression (52) pouvant pivoter et nettoyant les produits des champs avec de l'eau sous pression.

6. Dispositif de nettoyage (10) destiné à nettoyer les produits des champs, tels que les pommes de terre ou les betteraves, selon l'une quelconque des revendications 1 à 5, **caractérisé en ce qu'** un dispositif vibrant (46) est prévu pour secouer les produits des champs.

7. Dispositif de nettoyage (10) destiné à nettoyer les produits des champs, tels que les pommes de terre ou les betteraves, selon l'une quelconque des revendications 1 à 6, **caractérisé en ce qu'**un crible (47) est prévu pour capter la terre et les matières semblables.

8. Dispositif de nettoyage (10) destiné à nettoyer les produits des champs, tels que les pommes de terre ou les betteraves, selon l'une quelconque des revendications 1 à 7, **caractérisé en ce que** le dispositif de nettoyage (10) est configuré sous forme de remorque mobile (50) pour un véhicule de traction.

9. Dispositif de nettoyage (10) destiné à nettoyer les produits des champs, tels que les pommes de terre ou les betteraves, selon l'une quelconque des revendications 1 à 8, **caractérisé par** un bac de nettoyage (48) rempli d'eau permettant de transporter les produits des champs au moyen d'un convoyeur (16) en vue de les nettoyer.

10. Dispositif de nettoyage (10) destiné à nettoyer les produits des champs, tels que les pommes de terre ou les betteraves, selon l'une quelconque des revendications 1 à 9, **caractérisé en ce que** le tambour de criblage (26) est disposé au-dessus d'un bac de rétention d'eau (53).
